# EUROPEAN PATENT SPECIFICATION

(11) **EP 1 331 118 B1**
(45) Date of publication and mention of the grant of the patent: **27.10.2004**
(21) Application number: 02075309.1
(22) Date of filing: 23.01.2002
(51) Int. Cl.: B60H 3/06

(54) **Air pollution trap and automatic filter regeneration system for a vehicle air conditioning system**
Luftfilter im Klimaanlage für Kraftfahrzeuge und automatisches Verfahren zur Regenerierung
Filtre à pollution pour système de climatisation pour véhicule automobile et dispositif de regeneration automatique du filtre

(43) Date of publication of application: 30.07.2003
(73) Proprietor: Ford Global Technologies, Inc., Dearborn, Michigan 48126-2490 (US)
(72) Inventor: Karlsson, Jan, 426 58 Västra Frölunda (SE); Petersson, Martin, 42643 HISINGS-KÄRRA (SE)
(74) Representative: Bergquist, Kjell Gunnar

(56) References cited:
- DE-A- 3 314 997
- DE-A- 19 728 569
- FR-A- 2 744 375
- US-A- 5 927 084

## Description

### TECHNICAL FIELD

The current invention relates to a method for removing harmful pollutants, such as hydrocarbon compounds, from ambient air by means of an adsorption unit arranged in a vehicle provided with a combustion engine and a ventilation system for a passenger compartment, according to the preamble of independant claim 1, and to an arrangement according to the preamble of independant claim 21.

### BACKGROUND ART

An example of such a method and arrangement is disclosed for example in DE 197 28 569.

The development of new internal combustion engines for vehicles has mainly been directed towards increasing the efficiency of the engines, in order to reduce the amount of harmful emissions. Catalytic converters are widely used for reducing the amount of pollutants in exhaust gases. In this context it is also known to arrange hydrocarbon-adsorbing means, such as a zeolite, between the exhaust manifold and the catalytic converter, in order to contain hydrocarbons until the converter has reached its light-off temperature. Combined electric and combustion engines, also known as hybrid engines, can also be used for reducing the amount of exhaust emissions. All such measures are however only aimed at reducing the emissions created by the vehicle itself.

In the following text, the term "hydrocarbons" denotes a group of chemical compounds of carbon and hydrogen in gaseous form generally known as Non-Methane Organic Gas (NMOG). This is a mixture of any gaseous hydrocarbons and any oxygenated hydrocarbons, except methane. NMOG means the sum of non-oxygenated and oxygenated hydrocarbons contained in a gas sample as measured in accordance with the "California Non-Methane Organic Gas Test Procedures". Hydrocarbons in this form can be the result of incomplete combustion in an internal combustion engine, the exhausts of which have been emitted to the atmosphere.

Recent methods have instead been aimed at purifying ambient air and polluted air from other vehicles. US 6200542 discloses a method for breaking down toxic substances such as ozone. At ground level, ozone is formed through photosynthesis of hydrocarbons and nitrous oxides. This creates the haze commonly known as smog, which forms when exhaust gases from combustion engines and other sources are exposed to sunlight. According to the known method, a catalytic coating is applied to the radiator and other surfaces in the engine compartment. When the ozone comes into contact with these surfaces it is converted to oxygen.

A further known method, described in EP 1082990, uses an HC trap adjacent to the radiator for adsorbing pollutants from the ambient air while the vehicle is moving. The adsorbing process is followed by desorption by passing heated intake air through the trap to an intake conduit of the engine. This arrangement is operated when the vehicle is moving.

However, none of the known methods disclose a method for using the ventilation system for cleaning ambient air by adsorption of hydrocarbons while the vehicle is either stationary, with the ignition switched off, or moving, combined with desorption and combustion of hydrocarbons when the vehicle is moving.

In addition, both the known arrangements are directly exposed to a flow of ambient air and will be sensitive to particles of dirt, tarmac and dust settling on the active surfaces. This problem is solved by the invention.

### DISCLOSURE OF INVENTION

The current invention relates to a method for removing harmful pollutants, such as hydrocarbon compounds, from ambient air by means of an adsorption unit arranged in a vehicle, which vehicle includes a combustion engine and a ventilation system for a passenger compartment. According to the method, adsorption takes place mainly when the vehicle is stationary, preferably with the ignition switched off, whereby a fan in the ventilation system is operated when at least one predetermined condition is fulfilled, and partly when the vehicle is moving with the ventilation system in operation. The fan draws ambient air into the ventilation system in a first direction, through an adsorption unit provided in said system.

Subsequent regeneration of the adsorption unit will only take place when the vehicle is being operated, with the ignition switched on. Air is supplied to a first heating means in the form of a first heat exchanger where it is heated. The heated air is then passed through the adsorption unit in order to release the pollutants and regenerate said unit. Preferable said heated air is supplied in the reverse direction to the normal flow of air through the arrangement. The air containing said pollutants is passed through a second heating means, whereby the hot polluted air is passed through the first heat exchanger in order to heat the air from the first source of ambient air. Finally, the polluted air is drawn from the heat exchanger to an intake conduit of the combustion engine. In this way the pollutants can be burnt in a combustion chamber of the engine and any remaining pollutants may be destroyed in the existing catalytic converter of the vehicle exhaust system.

The temperature required for releasing the pollutants in the adsorbing unit depends on the type of pollutant to be adsorbed, the choice of material in the filter of the adsorbing unit, and the quality of the filter material. The latter will decide the pollution levels at which the adsorption unit can operate. Also, for filter materials adapted for very low pollution levels the pollutants will bond strongly to the filter material. An example of low pollution levels are concentrations of pollutants down to one or a few parts per million (ppm). Such a bond can only be broken by heating the filter material to a relatively high temperature. An example of such materials are certain high grade active carbons used for adsorbing NMOG. Consequently, a lower grade material will require less heating, but will only adsorb at relatively high concentrations of pollutants. In this context, a relatively high temperature is 120-140 °C, while a relatively low temperature is 80-90 °C.

To initiate cleaning of ambient air when the vehicle is stationary, one predetermined condition may be that the level of the pollutants, such as hydrocarbons, in the ambient air exceeds a set limit. The arrangement can also be set to operate during certain times of the day when the pollution levels are known or likely to be high, such as the rush hour during the morning and afternoon as well as the time in-between.

In order to avoid running down the battery of the vehicle, the fan may be powered by alternative sources of electricity, such as a solar panel, when the vehicle is stationary.

The second heating means, or heat exchanger, for heating the polluted air, which in turn heats the air used for regenerating the adsorption unit, may be an exhaust manifold attached to said engine. The exhaust manifold is preferably provided with a surrounding cover to make it double walled. This double walled exhaust manifold provides the second heat exchanger. Other heating means, such as electric heaters, may be used, but as an internal combustion engine is available the previous solution is preferable.

The ambient air cleaned by the adsorption unit is preferably used to ventilate the passenger compartment, as the existing ventilation conduits may be used for the arrangement. During regeneration the air is passed through the adsorption unit in a direction opposite to said first direction. As stated above, the air is preferably supplied from the passenger compartment in order for the existing ventilating ducts to be used.

When the vehicle is moving, the ambient air may be cleaned as soon as air passes through the ventilation system, either with the aid of the fan or by the increased air pressure in front of the vehicle caused by the forward movement of the vehicle. This airflow is dependent on the selected setting of the existing ventilation controls on the dashboard, but both settings will cause air to flow through the ventilation system.

In this way the fan, ducts and conduits of the existing ventilation system may be used with very few alterations.

As the adsorption unit forms a part of the passenger compartment ventilation system, regeneration is only performed when at least one predetermined condition is fulfilled. One such predetermined condition is that the amount of pollutants adsorbed by the adsorption unit exceeds a set level, or that the system has been operated for a predetermined period of time. A further predetermined condition is that the inlet and outlet of the ventilation system are closed. The ventilation conduits leading into and out of the adsorption unit are each provided with an additional conduit, for heated air and polluted air respectively. This arrangement forces the heated air through said unit and prevents polluted air from escaping through the ventilation system inlet and the passenger compartment air filter. A further condition may be that the engine and its catalytic converter must have reached their normal operating temperatures, so that heating of the engine after a cold start is not delayed by the regeneration process.

An alternative embodiment of the regeneration arrangement described above uses only the second heat exchanger, that is the double walled exhaust manifold for heating ambient air. In this case the heated ambient air would be drawn directly through the adsorbing filter during regeneration. However, due to the higher temperature of the air leaving the second heat exchanger, a means for controlling this temperature will be required. This means could be a further heat exchanger a valve arrangement for injecting additional ambient air to lower the temperature. In the latter case this would eliminate the need for more than one heat exchanger.

According to a further embodiment, a second adsorbing filter is provided for collecting pollutants in the exhaust during a cold start of the engine. After a period of time the existing catalytic converter will reach its light-off temperature and the second adsorbing filter is disconnected from the exhaust conduits of the engine. The second adsorbing filter can be connected to the conduits used for regeneration of the first adsorbing filter, by means of a number of controllable valves. The valves are arranged to connect each filter to the inlet manifold in turn. When required, the second adsorbing filter can be cleaned as described above.

### BRIEF DESCRIPTION OF DRAWINGS

In the following text, the invention will be described in detail with reference to the attached drawings. These drawings are used for illustration only and do not in any way limit the scope of the invention. In the drawings:
- Figure 1: shows an arrangement according to the invention during normal, ventilating operation;
- Figure 2: shows the arrangement of Figure 1 during regeneration of an adsorption unit;
- Figure 3: shows a schematic control diagram for the arrangement according to the invention;
- Figure 4: shows a graph of pollution levels in a city over a 24-hour period;
- Figure 5: shows an arrangement according to a further embodiment of the invention for an adsorbing operation during a cold start;
- Figure 6: shows the arrangement of Figure 5 during regeneration of the adsorption unit.

### MODES FOR CARRYING OUT THE INVENTION

In the following text a number of embodiments will be described in detail. When describing the direction of the flow of air, the terms "upstream" and "downstream" are defined to apply to the instantaneous direction of flow. Because the direction of flow is reversed between adsorbing and desorbing modes, a first device may be placed upstream of a second device in the adsorbing mode and downstream of the same device in the desorbing mode.

The description below describes a method and an arrangement for removing harmful pollutants, such as hydrocarbon compounds, from ambient air by means of an adsorption unit arranged in a ventilation system for a passenger compartment in a vehicle provided with a combustion engine.

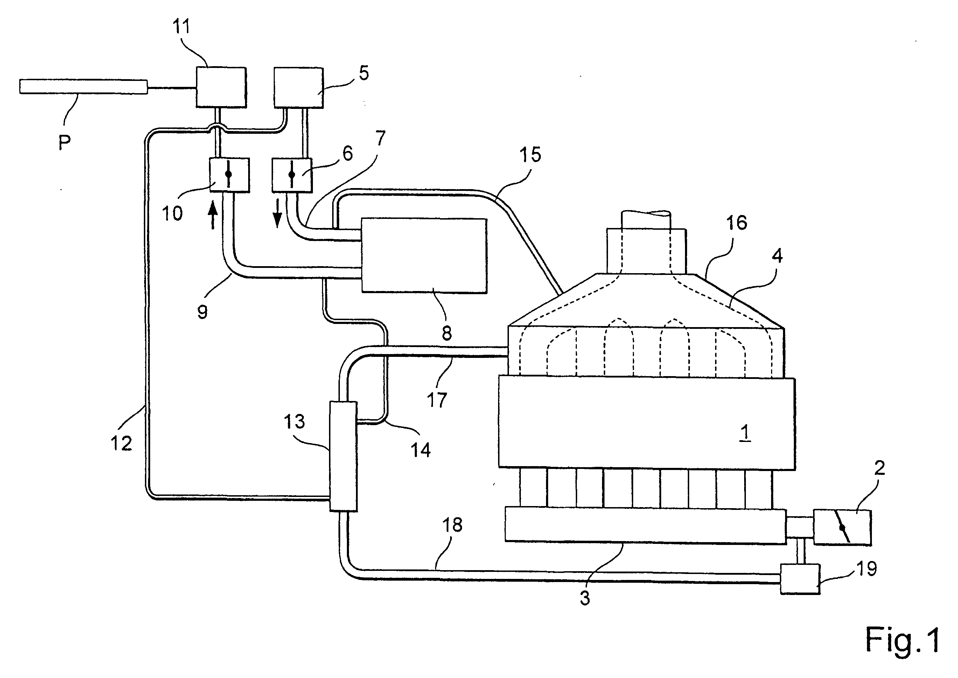

Figure 1 shows a multicylinder internal combustion engine 1 with an intake conduit provided with a main throttle 2. From the throttle 2, intake air passes through an inlet manifold 3 connected to each cylinder. The combusted exhaust gases leaves the engine through an exhaust manifold 4. In this case the exhaust manifold 4 is double walled, in order to enable an air stream to be heated without coming into contact with the exhaust gases. This is achieved by enclosing the exhaust manifold 4 within an outer casing 16, allowing an air stream to flow between the exhaust manifold and the casing. This arrangement will be described in more detail below. The exhaust gases subsequently passes through a conventional catalytic converter and a silencing arrangement (not shown), out into the atmosphere.

The vehicle is further provided with a ventilation system for ventilating a passenger compartment. The ventilation system comprises an air filter 5 for ambient air, which filter removes small particles, pollen, etc. from the air drawn into the ventilating system. During an adsorption mode, ventilating air is drawn into the air filter 5 from the ambient atmosphere. From the air filter 5 the ventilating air is drawn through a first control valve 6 and a first ventilating duct 7, into a filter 8 for adsorbing hydrocarbon. Apart from preventing harmful particles from reaching the passenger compartment, the air filter protects the adsorbing filter and prevents it from becoming clogged by dust and other such particles. The hydrocarbon-adsorbing filter 8 preferably contains active carbon or a zeolite. Other suitable adsorbent or adsorbent materials may be used depending on the pollutant to be adsorbed. The cleaned air is then drawn through a second ventilating conduit 9 and a second control valve 10 by a ventilating fan 11. Finally, the fan 11 blows the ventilating air is through the existing ventilating ducts and ventilator outlets (not shown) into the passenger compartment. An advantageous side effect of the invention is that the passenger compartment is ventilated when the system is in operation. This cools the passenger compartment in a warm climate and reduces humidity in a cold climate.

According to the preferred embodiment described above, the ventilation system includes both an air filter 5 and a hydrocarbon-adsorbing filter 8. However, it is also possible to eliminate the separate air filter 5 by using the hydrocarbon-adsorbing filter 8 as a combined air filter and adsorbing filter. The combined filter unit could be provided with an integrated housing, with a replaceable air filter section immediately adjacent the hydrocarbon-adsorbing section to achieve the above protective function.

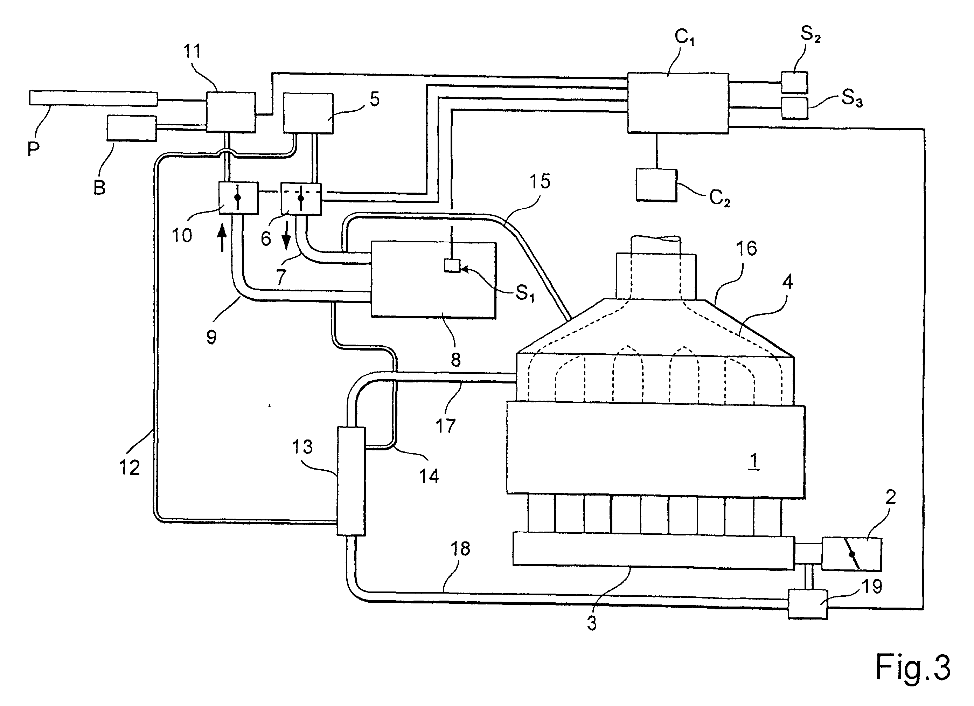

The above arrangement is mainly operated when the vehicle is stationary, that is, when it is parked with the ignition switched off. This enables the filter 8 to adsorb hydrocarbons from the ambient air while the vehicle is not in use. Control of the operation of the system is preferably achieved by means of a sensor, which monitors the level of pollution or concentration of hydrocarbon in the ambient air surrounding the vehicle. Such a sensor arrangement is shown in Figure 3. The sensor trigger level can be set at the factory, or at the point of sale, in order to adapt the system to different markets, local conditions or current regional or national legislation.

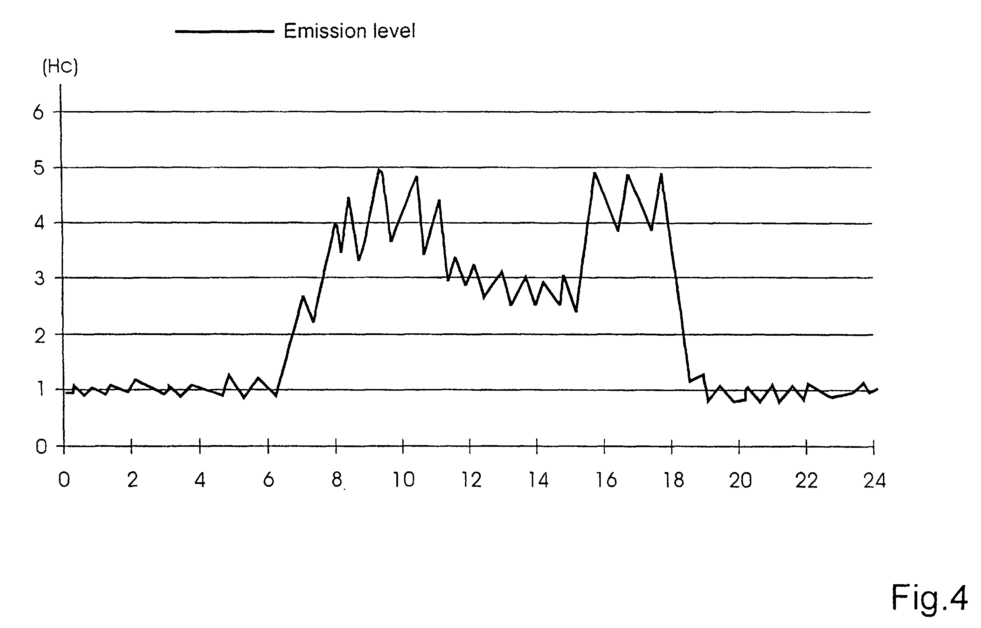

The system can also be provided with a timer set to switch the system on during those times of day when the level of pollution is known to be high. These levels may vary between different cities and regions, but as a rule the pollution level will follow the amount of commuting traffic. During a normal working day in an average city, levels will begin to rise at about 6:00, peak between 7:00 and 9:00, drop slightly during the day. The levels will peak again between 16:00 and 18:00 before dropping down to normal levels around 19:00. Figure 4 shows a graph of pollution levels over a 24-hour period for a typical city.

Whether the vehicle uses a timer or a sensor, this will allow an average stationary vehicle to adsorb hydrocarbons from the ambient air during 7-8 hours each working day. The capacity of the filter must be selected so that it can adsorb a predetermined concentration of hydrocarbons from the ambient air for at least such a period of time, without becoming saturated between successive regenerations. This capacity is calculated by using the capacity of the ventilating fan, the expected maximum pollution level and the longest period of time over which the fan is expected to operate.

As the vehicle according to this example is stationary when the adsorbing process is being performed, it is necessary to provide power to the system without draining the standard battery pack used for e.g. starting the vehicle. Most of this power will be used for operating the fan, but other parts, such as various controllable valves and sensors must also be supplied with electric power. In the example shown in Figure 1, a solar panel P mounted on the vehicle is used for this purpose.

Power can, however, also be supplied from other sources of renewable energy, an external plug-in source, an additional rechargeable battery pack in the vehicle or a combination of the above. Such a combination of the above alternatives would be required for special cases, such as when a heavy snowfall covers the solar panel, making it inoperative. An additional power source B of this type is indicated in Figure 3.

The above examples describe the arrangement for a stationary vehicle. When the vehicle is moving, the ambient air is either drawn through the ventilation system as described above, with the fan powered by a generator or a rechargeable battery in the vehicle , or forced through the system by the air pressure built up in front of the vehicle as it travels forward at speed . A standard ventilation system is provided with a number of different control settings on the dashboard. These settings may include functions such as fan speed, free flow (the fan switched off), recirculation and ventilation shut-off. In this case, cleaning of ambient air takes place as soon as a setting allowing airflow through the ventilation system is selected. For an average vehicle, the relative amount of hydrocarbons adsorbed by the filter when the vehicle is stationary and moving is 80-90% and 10-20% respectively. This is generally proportional to the periods of time when an average commuting vehicle is parked and in use.

As stated above, the hydrocarbon adsorbing filter 8 has a limited capacity for adsorbing pollutants and must therefore be regenerated before it reaches its maximum storage capacity and becomes saturated. The regeneration process is initiated when a signal from a sensor S₁ in the filter 8 indicates that the amount of hydrocarbon has exceeded a predetermined level.

Alternatively, regeneration can also be initiated when a system controlled by an ambient air pollution sensor S₂ has been operated for a predetermined period of time. In this embodiment it is assumed that the filter unit is approaching saturation when the fan has been operated for a predetermined period of time, during which the sensed ambient air pollution level has been above the pre-set trigger limit.

The regeneration of the filter 8 takes place when the engine is running and has reached its normal operating temperature. Immediately after a cold start, the exhaust manifold will not be sufficiently warm and the catalytic converter will not have reached its light-off temperature. Hence, the regeneration is not performed until a signal from an existing engine management system confirms that the light-off temperature has been reached (see Figure 3). During regeneration, the first and second control valves 6, 10 are arranged to close the inlet and outlet of ventilating air to and from the first and second ventilating ducts 7, 9 respectively. These inlet and outlet valves are temporarily closed in order to isolate the filter from the ventilation system when a regeneration of the hydrocarbon-adsorbing filter is being performed. As closure of the control valves 6, 10 will interrupt the flow of air into the passenger compartment, the regeneration cycle must also be adapted to operate without causing inconvenience or discomfort for the occupants. In a preferred embodiment, an existing passenger compartment air recirculation function is used during regeneration. This type of function is available in most modern vehicles and is commonly used for e.g. preventing exhaust fumes from entering the compartment in tunnels or in slow moving traffic. As the regeneration cycle typically only requires 1-5 minutes to purge the filter unit, it is unlikely to be noticed by the passengers.

The function can also be achieved either by an intelligent central processing unit CPU having sensors S₃ humidity and temperature in the compartment, in order to decide when the regeneration cycle can be started, or by providing the system with bypass duct to allow the fan to draw air directly from the air filter 5 during the regeneration cycle. A further alternative could be to provide the system with an additional adsorbing filter that would be used during regeneration.

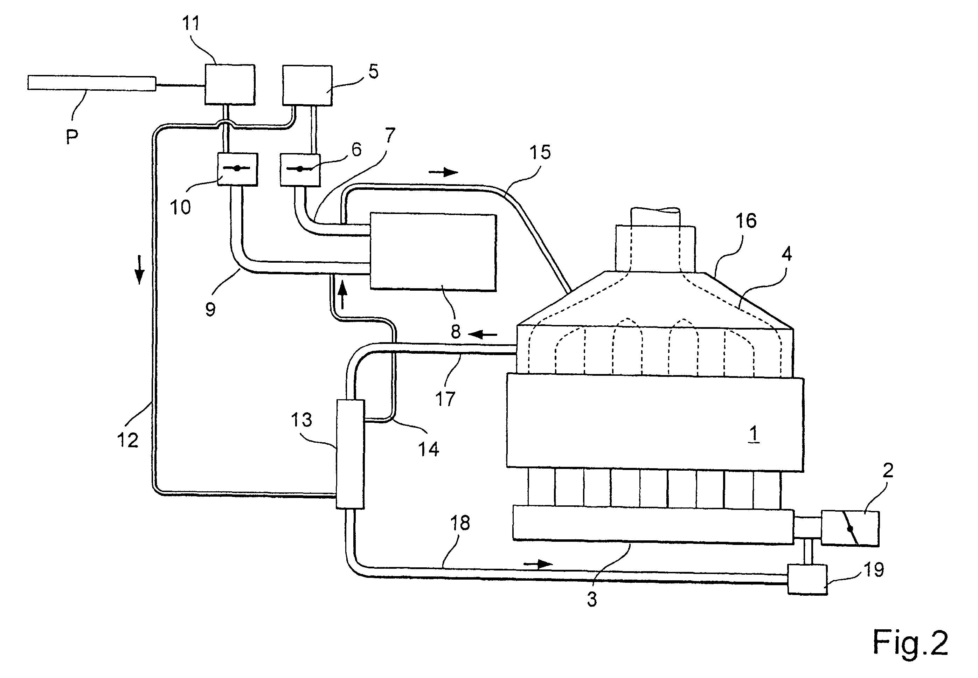

The flow of air through the system during a regeneration mode is shown in Figure 2. As soon as the first and second control valves 6, 10 are closed, a third control valve 19 is arranged to open in order to provide a source of low pressure from the intake manifold 3 of the engine 1. This low pressure causes ambient air to be drawn from the atmosphere, through the compartment air filter 5 and into a first regeneration duct 12. The air is then drawn through a first heat exchanger 13, where it is heated to a temperature sufficiently high to cause hydrocarbons to be released from the adsorbing filter 8. Typically, the temperature required for this purpose is 120-150 °C. However, in order to prevent the filter unit 8 from being poisoned by heavy hydrocarbon fractions, regeneration at elevated temperatures, such as 200°C, is required at regular intervals, e.g. every 10^{th} regeneration cycle. Hydrocarbon poisoning will eventually cause the filter to become inoperative. The heat exchanger can be of any suitable type, such as a tubular or a plate heat exchanger, preferable of the counter-flow type. From the first heat exchanger 13, the heated ambient air is drawn through a second regeneration conduit 14 that is connected to the second ventilating duct 9. The heated air then passes through the hydrocarbon-adsorbing filter 8 in the opposite direction to the normal ventilating airflow. When passing through the filter 8, the hot air causes the hydrocarbons to release from the adsorbent material and mix with the flowing air. The mixture of air and hydrocarbons is drawn through a third regeneration conduit 15 connected to the first ventilating duct 7, and into a second heat exchanger 4, 16. This heat exchanger comprises a double walled exhaust manifold 4, 16, which comprises a surrounding cover 16 that encapsulates a section of the exhaust manifold 4 from the side of the engine past a point where the branches of the manifold are joined. When passing the exhaust manifold 4 the mixture of air and hydrocarbons is heated to a temperature sufficient to raise the temperature of the ambient air in the first heat exchanger 13 to the required levels stated above. The heated mixture is drawn from the double walled exhaust manifold 4, 16 to the heat exchanger 13 via a fourth regeneration conduit 17. After heating the ambient air to be supplied to the adsorbing filter 8, the mixture of air and hydrocarbons is drawn through a fifth regeneration conduit 18 and a the third control valve 19 into the inlet manifold 3 of the combustion engine 1. In this way the hydrocarbons may be combusted in the engine 1 and any residual products will be handled by the conventional catalytic converter.

By reversing the direction of flow during regeneration, it is ensured that no pollutants will be drawn into the passenger compartment. When the adsorption mode is resumed, any pollutants remaining in the first ventilation duct 7 or the fourth regeneration conduit 15 will simply be drawn back into the adsorbing filter 8.

According to a further embodiment, the heating of the ambient air can be performed by the second heat exchanger alone. In this embodiment, ambient air would either be supplied to the adsorbing unit, during adsorption mode, or be drawn directly to the double walled heat exchanger to be heated by the exhaust manifold, during desorption mode. The supply of ambient air can be controlled by a valve immediately after the air filter, or be drawn from the air filter and a separate source of ambient air. The heated air would then be drawn through the adsorbing filter and onwards to the intake manifold, as described above. However, as the temperature of the exhaust manifold can vary between 400-950°C for a petrol engine (250-800°C for diesel engines), the temperature of the air leaving the double walled, second heat exchanger will need to be controlled in order to avoid overheating of the adsorbing filter. This can be achieved by a cooling means, such as a heat exchanger, but more preferably by an arrangement for injecting varying amounts of ambient air (not shown). This can be achieved by means of a controllable valve and a temperature sensor (not shown) placed between the manifold heat exchanger and said valve. The central processing unit (see Fig. 3, "C₁") could then control the valve to inject ambient air into the heated airflow and modify its temperature, based on the signal from said temperature sensor.

Regeneration of the hydrocarbon adsorbing filter 8 takes place when the engine is operated at low load, which is the most common operating condition for a vehicle driven by an internal combustion engine. At low load, the pressure in the intake pipe or manifold 3 downstream of the throttle 2 will be low. At high load, or acceleration, the control valve 19 is closed, partly due to the increased pressure in the manifold, and partly to prevent a reduced response caused by the added hot mixture of air and hydrocarbons in the intake air. In addition, the increased pressure in the intake conduit of a normally aspirated engine would prevent air from being drawn through the system at high load. For a supercharged engine, desorption can be performed during high load by supplying the mixture to an intake arrangement for a turbocharger or compressor (not shown). This arrangement may include an injector valve or similar to achieve a vacuum for creating a sufficient flow of air through the conduits during desorption.

Experiments have shown that the addition of heated air to the intake air during low load, can in itself reduce the fuel consumption by up to 3%. The added mixture of air and hydrocarbon during regeneration can give a further reduction in the region of 0,05-0,1%.

The switching between the ventilating (adsorption) and regeneration (desorption) modes, including the operation of the fan 11 and the opening and closing of the first, second and third valves 6, 10, 19, is preferably controlled by a central processing unit C₁, or CPU, as shown in Figure 3. Said unit is also connected to the sensors, such as the adsorption unit saturation sensor S₁, the ambient air pollution level sensor S₂ and the optional temperature and humidity sensor S₃ in the passenger compartment. In order to determine whether the engine is switched off or its current operating state, the control unit will also need data from the engine management unit C₂.

The arrangement used for the regeneration cycle can also be adapted for a further purpose. By opening the first and second control valves 6, 10 in the first and second ventilating ducts 7, 9, the heated air from the heat exchanger 13 can be drawn into the passenger compartment. This heated air can, for instance, be used for rapid defrosting. The air that would normally pass through the adsorbing filter to the engine will instead be taken directly from the air filter 5. As for the normal regeneration process, this function can only be used once the engine reaches its normal operating temperature.

A modification of the embodiment shown in Figures 1 and 2 can also be used for removing pollutants from the exhaust gases during a cold start of the engine, before the catalytic converter has reached its light-off temperature.

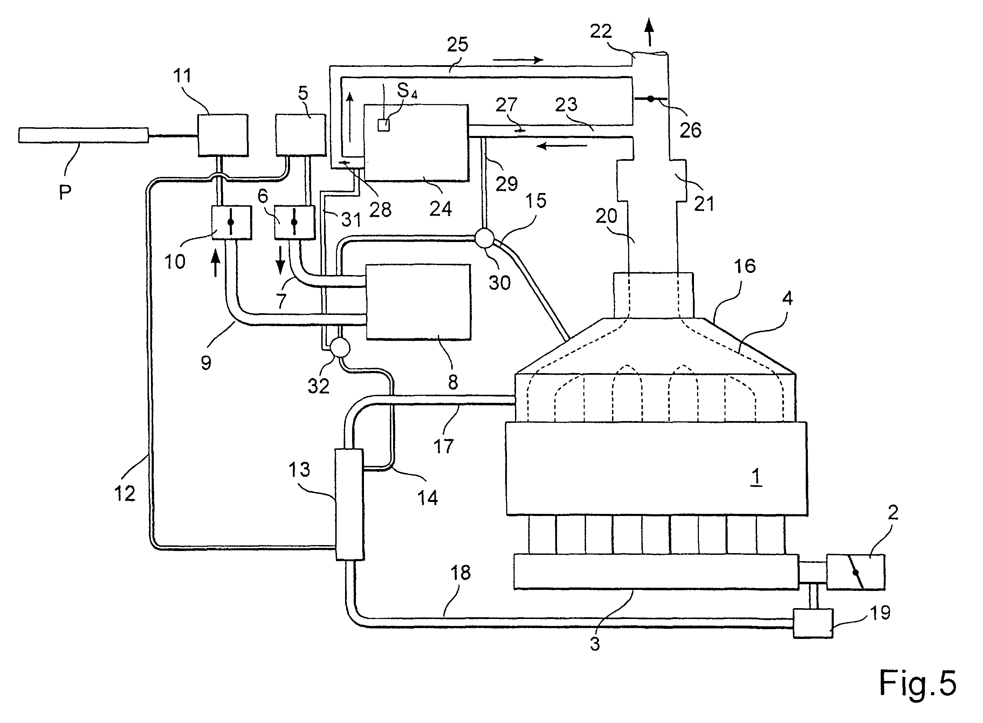

This embodiment is shown in Figure 5. After the exhaust manifold 4, the exhaust system comprises a first exhaust conduit 20, a catalytic converter 21 and a second exhaust conduit 22, eventually leading out to the atmosphere. Immediately downstream of the catalytic converter 21 the second exhaust conduit 22 branches into a third exhaust conduit 23 connected to a second adsorbing filter 24. A fourth exhaust conduit 25 leads out of the second adsorbing filter 24 and is connected to the second exhaust conduit 22 downstream of the point where said branch for the third exhaust conduit 23. A controllable exhaust throttle 26 is arranged between the points where the third and fourth exhaust conduits 23, 25 are connected to the second exhaust conduit. The exhaust throttle 26 is normally open, but will close during the adsorption mode of the second adsorbing filter 24. The operation during the adsorption mode is shown in Figure 5 and is as follows. During a cold start, the throttle 26 closes, forcing the exhaust through the adsorbing filter 24 via the third and fourth exhaust conduits 23, 24. The flow of exhaust through the filter continues until the existing catalytic converter 21 reaches its light-off temperature.

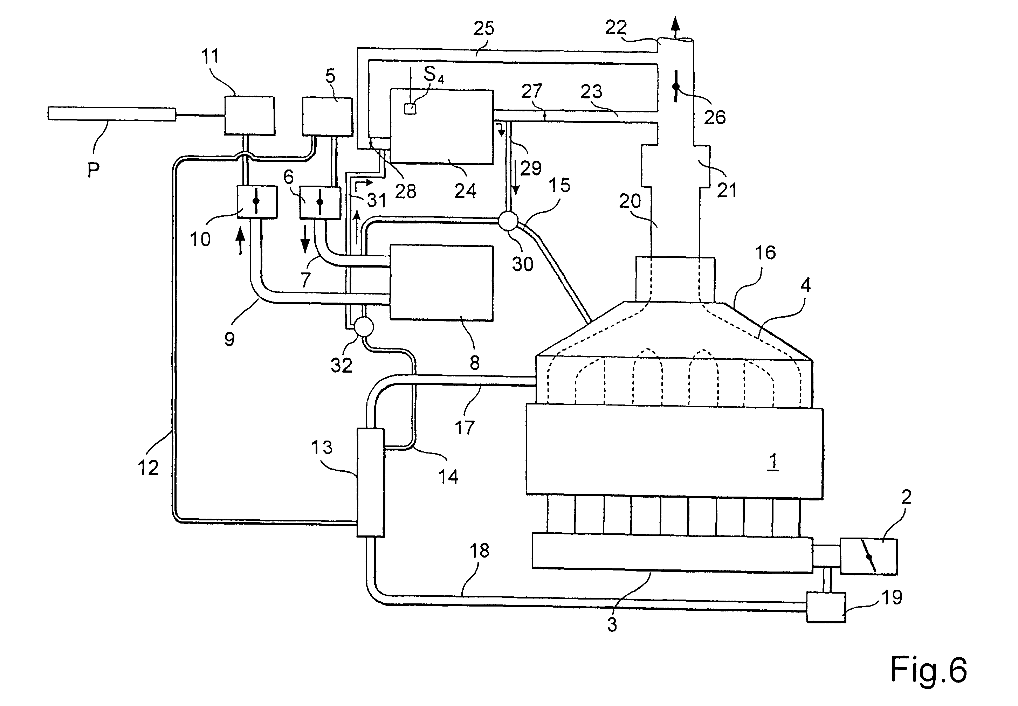

In order to desorb the second adsorbing filter 24, it has to be connected to the existing regeneration conduits. This is achieved by providing each of the third exhaust conduit 23 and the fourth exhaust conduit 25 with a first and second regeneration throttle 27, 28 respectively, upstream and downstream of the adsorbing filter 24. The first and second regeneration throttles 27, 28 are normally closed, but will open during the adsorption mode of the second adsorbing filter 24. Between the first regeneration throttle 27 and the adsorbing filter 24, the third exhaust conduit 23 branches into a sixth regeneration conduit 29 that is connected to a first three-way valve 30 in the third regeneration conduit 15 in the existing regeneration arrangement shown in Figure 1 and 2. Similarly, between the second regeneration throttle 28 and the adsorbing filter 24, the fourth exhaust conduit 25 branches into a seventh regeneration conduit 31 that is connected to a second three-way valve 32 in the second regeneration conduit 14. The operation during the desorption mode is shown in Figure 6 and is as follows. After the completion of a cold start adsorption sequence it may be necessary to regenerate the second adsorbing filter 24. As for the first filter 8 this is initiated if a sensor S4 indicates that the filter 24 is full or nearly full. The sensor 24 is connected to a central processing unit (see Fig. 3, "C₁") that would function as described in connection with Figure 3 above. Regeneration can take place on the condition that the engine is running, that the catalytic converter 21 has reached its working temperature, and that the first adsorbing unit is not being regenerated. When these conditions are met, the three-way valves 30, 32 are operated to switch the flow of heated ambient air from the second regeneration conduit 14 through the seventh regeneration conduit 31, the second adsorbing filter 24, the sixth regeneration conduit 29, back to the third regeneration conduit 15. As soon as the second adsorbing filter 24 has been regenerated, the three-way valves 30, 32 will return to their normal positions allowing a flow of air through the first adsorbing filter 8. As for the embodiment of Figure 2 this flow of air through the regeneration conduits is created by the low pressure in the inlet manifold 3 when the third control valve is opened.

As indicated by the arrows and the open first and second valves 6 and 10, adsorption of pollutants from the ambient air by the first adsorbing filter 8 can continue uninterrupted during desorption of the second adsorbing filter 24.

The cold start arrangement can also be adapted to the embodiment described above, where ambient air would be drawn directly to the double walled heat exchanger to be heated by the exhaust manifold (not shown). In this case the second three-way valve 32 would be positioned downstream of the temperature controlling means, but upstream of both the first and second adsorbing filters 8, 24. The second three-way valve 32 would be positioned downstream of the first and second adsorbing filters 8, 24.

Although the above embodiments are intended to adsorb hydrocarbons, or NMOG, the filter unit may also be adapted for other pollutants. By selecting an appropriate filter material, the adsorbing unit can be adapted for specific molecules of alternative pollutants such as nitric oxides (NO and NO2), carbon monoxide, ozone or various other organic compounds.

## Claims

1. Method for removing pollutants from ambient air by means of an adsorption unit (8) arranged in a vehicle, which vehicle includes a combustion engine (1), having an inlet manifold (3) and an exhaust manifold (4), and a ventilation system (5, 6, 7, 8, 9, 10, 11) for a passenger compartment, wherein a pollution adsorbing unit (8) is arranged in the ventilation system, whereby adsorption of pollutants is performed when ambient air is arranged to flow through the ventilation system and the adsorbing unit (8) in a first direction, **characterized in that** desorption is performed when ambient air is arranged be heated by the exhaust manifold and to flow through the adsorbing unit (8) in a second direction, and that desorbed pollutants flows from the filter unit (8) to the inlet manifold (3).

2. Method according to claim 1, **characterized in that** adsorption takes place both when the engine (1) is running and when the engine is switched off, whereby
• a fan (11) in the ventilation system is operated;
• the fan (11) forces ambient air from an inlet (6) to the ventilation system in a first direction, through an adsorption unit (8) provided in said system, and out of an outlet (10) of the ventilation system,
and that desorption of the adsorption unit takes place when the engine (1) is running, whereby;
• ambient air is supplied to a first heating means (13) where it is heated;
• the heated air is passed through the adsorption unit (8) in order to release the pollutants to the air and regenerate said unit;
• the air containing said pollutants is passed through a second heating means (4, 16);
• the heated polluted air is passed through the first heating means (13) in order to heat said ambient air;
• the polluted air is drawn from the first heating means (13) to an intake conduit (3) of the combustion engine (1).

3. Method according to claim 2, **characterized in that** the fan (11) is operated when the engine (1) is switched off, if at least one predetermined condition is fulfilled.

4. Method according to claim 3, **characterized in that** one predetermined condition is that the level of the pollutants in the ambient air exceeds a set limit.

5. Method according to claims 2 or 4, **characterized in that** the pollutants are hydrocarbons.

6. Method according to claims 2 or 4, **characterized in that** the pollutants are nitrous oxides.

7. Method according to claims 2 or 4, **characterized in that** the pollutant is carbon monoxide.

8. Method according to claims 2 or 4, **characterized in that** the pollutant is ozone.

9. Method according to claim 2, **characterized in that** the fan (11) is powered by a solar panel (P) when the engine (1) is switched off.

10. Method according to claim 2, **characterized in that** the ambient air cleaned by the adsorption unit (8) is used to ventilate the passenger compartment.

11. Method according to claim 2, **characterized in that** the air is passed through the adsorption unit (8) in a direction opposite to said first direction during desorption.

12. Method according to claim 2 or 11, **characterized in that** desorption is performed when at least one predetermined condition is fulfilled.

13. Method according to claim 12, **characterized in that** one predetermined condition is that the amount of pollutants adsorbed by the adsorption unit (8) exceeds a set level.

14. Method according to claim 12, **characterized in that** one predetermined condition is that the inlet (6) and outlet (10) of the ventilation system are closed.

15. Method according to claim 12, **characterized in that** one predetermined condition is that the ventilation fan (11) has been operated for a predetermined period of time.

16. Method according to claim 2, **characterized in that** the second heating means is a double walled exhaust manifold (4) attached to said engine (1).

17. Method according to claim 1, **characterized in that** a second pollution adsorbing unit (24) is arranged in an exhaust system of the vehicle, whereby adsorption of pollutants is performed when exhaust is arranged to flow through the adsorbing unit (24) in a first direction during a cold start of the engine, while desorption is performed when ambient air is arranged to flow through the adsorbing unit (24) in a second direction, and that desorbed pollutants flows from the filter unit (24) to the inlet manifold (3).

18. Method according to claim 17, **characterized in that** the second pollution adsorbing unit (24) is connected in parallel with the first adsorbing unit (8), whereby desorption is performed for each adsorbing unit (8, 24) in turn.

19. Method according to claim 18, **characterized in that** the second pollution adsorbing unit (24) is connected by means of three-way valves (30, 32), whereby the flow of ambient air can be switched between the two adsorbing units (8, 24).

20. Method according to claim 19, **characterized in that** the first adsorbing unit (8) adsorbs pollutants from the ambient air during desorption of the second adsorbing unit (24).

21. Arrangement for removing pollutants from ambient air by means of an adsorption unit (8) arranged in a vehicle, which vehicle includes a combustion engine (1), having an inlet manifold (3) and an exhaust manifold (4), and a ventilation system (5, 6, 7, 8, 9, 10, 11) for a passenger compartment, wherein the arrangement has an adsorption mode which can be operated when the engine is running and when the engine is switched off, whereby the arrangement comprises;
- a fan (11) in the ventilation system,
- an first air inlet (6) for ambient air,
- an first air outlet (10), arranged to supply air to a passenger compartment,
- a pollution adsorption unit (8), arranged between said air inlet (6) and air outlet (10),
**characterized in that** the arrangement has a desorption mode which can be operated when the engine is running, whereby the arrangement comprises;
- a second air inlet (6') for ambient air,
- a first heating means (13), arranged to heat the ambient air,
- the pollution adsorption unit (8), arranged to be desorbed by said heated ambient air,
- a second heating means (4, 16) for heating the mixture of air and pollutions, which heated mixture is arranged to heat the ambient air in the first heating means (13),
- a control valve (19) positioned between said first heating means and the inlet manifold (3), which valve is arranged to connect said second air inlet to a source of vacuum provided by the inlet manifold,

22. Arrangement according to claim 21, **characterized in that**, in adsorption mode, **in that** the fan (19) is arranged to operate when at least one predetermined condition is fulfilled.

23. Arrangement according to claim 22, **characterized in that** one predetermined condition is that the engine (1) is switched off.

24. Arrangement according to claim 22, **characterized in that** one predetermined condition is that the level of pollution in ambient air exceeds a predetermined limit.

25. Arrangement according to one of the claims 22-24, **characterized in that** one predetermined condition is that both the air inlet (6) and air outlet (10) are open.

26. Arrangement according to claim 21, **characterized in that**, in desorption mode, the control valve (19) is arranged to open when at least one predetermined condition is fulfilled.

27. Arrangement according to claim 26, **characterized in that** one predetermined condition is that the engine (1) has reached its normal operating temperature.

28. Arrangement according to claim 26, **characterized in that** one predetermined condition is that a sensor (S₁) has indicated that a predetermined saturation level of the adsorption unit.

29. Arrangement according to claim 26, **characterized in that** one predetermined condition is that both the air inlet (6) and air outlet (10) are closed.

30. Arrangement according to claim 21, **characterized in that** the airflow through the adsorbing unit (8) during desorption is reversed.

31. Arrangement according to claim 21, **characterized in that** the first heating means (13) is a heat exchanger.

32. Arrangement according to claim 21, **characterized in that** the second heating means (4, 16) is a heat exchanger arranged to be heated by the exhaust manifold (4).

33. Arrangement according to claim 21, **characterized in that** the arrangement further comprises means for adsorbing pollutants from the engine exhaust during a cold start, whereby said means includes;
- a second pollution adsorbing unit (24);
- an exhaust inlet (23), connecting an exhaust system of the vehicle with the second pollution adsorbing unit (24);
- an exhaust outlet (25), connecting the second pollution adsorbing unit (24) with the exhaust system;
and that the arrangement has a desorption mode which can be operated when the engine is running, whereby the arrangement comprises;
- a first control valve (32), positioned between the first heating means (13) and the first pollution adsorbing unit (8)
- an inlet (31) for heated ambient air,
- the second pollution adsorption unit (24), arranged to be desorbed by said heated ambient air,
- an outlet (29) for the mixture of heated ambient air and pollutants,
- a second control valve (30), positioned between the first pollution adsorbing unit (8) and the second heating means (4, 16).

34. Arrangement according to claim 33, **characterized in that** the first and second control valves (30, 32) are arranged to connect the supply of heated ambient air to the pollution adsorbing units (8, 24) in turn.

35. Arrangement according to claim 33, **characterized in that** a first exhaust throttle (26) is positioned in the exhaust system between the exhaust inlet (23) and the exhaust outlet (25), which throttle is arranged to close during cold start.

36. Arrangement according to claim 33, **characterized in that** the the exhaust inlet (23) and the exhaust outlet (25) are each provided with a second and third exhaust throttle (27, 28) respectively, which throttles are arranged to close during desorption mode.

## Patentansprüche

1. Verfahren zum Entfernen von Luftverunreinigungen aus der Umgebungsluft mittels einer Adsorptionseinheit (8), die in einem Fahrzeug vorgesehen ist, wobei das Fahrzeug eine Verbrennungsmaschine (1) mit einem Einlaßkrümmer (3) und einem Auslaßkrümmer (4) und ein Ventilationssystem (5, 6, 7. 8, 9. 10, 11) für einen Passagierraum aufweist, wobei eine Verunreinigungsadsorptionseinheit (8) in dem Ventilationssystemsystem vorgesehen ist, wobei die Adsorption von Luftverunreinigungen vorgenommen wird, wenn das Strömen von Umgebungsluft durch das Ventilationssystem und die Adsorptionseinheit (8) in eine erste Richtung vorgesehen ist, **dadurch gekennzeichnet, daß** die Desorption vorgenommen wird, wenn für die Umgebungsluft ein Heizen mittels des Auslaßkrümmers und ein Strömen durch die Adsorptionseinheit (8) in einer zweiten Richtung vorgesehen ist, und daß die desorbierten Luftverunreinigungen von der Filtereinheit (8) zu dem Einlaßkrümmer (3) strömen.

2. Verfahren nach Anspruch 1, **dadurch gekennzeichnet, daß** die Adsorption stattfindet, sowohl wenn die Maschine (1) läuft als auch wenn die Maschine ausgeschaltet ist, wobei
- ein Gebläse (11) in dem Ventilationssystem betrieben wird;
- das Gebläse (11) Umgebungsluft aus einem Einlaß (6) in das Ventilationssystem in eine erste Richtung, durch eine Adsorptionseinheit (6), die im System vorgesehen ist und aus einem Auslaß (10) des Ventilationssystems drückt,
und daß die Desorption der Adsorptionseinheit stattfindet, wenn die Maschine (1) läuft, wobei
- Umgebungsluft einer ersten Heizungseinrichtung (13) zugeführt wird, wo sie erhitzt wird;
- die erhitzte Luft durch die Adsorptionseinheit (8) zur Freigabe der Luftverunreinigungen an die Luft und zur Regeneration der Einheit geleitet wird;
- die Luftverunreinigungen enthaltende Luft durch eine zweite Heizungseinrichtung (4, 16) geleitet wird;
- die erhitzte verunreinigte Luft durch die erste Heizeinrichtung (13) zur Erwärmung der Umgebungsluft geleitet wird;
- die verschmutzte Luft aus der ersten Heizeinrichtung (13) zu einer Einlaßleitung (3) der Verbrennungsmaschine (1) geleitet wird.

3. Verfahren nach Anspruch 2, **dadurch gekennzeichnet, daß** das Gebläse (11) betrieben wird, wenn die Maschine (1) abgeschaltet ist, falls wenigstens eine vorbestimmte Bedingung erfüllt ist.

4. Verfahren nach Anspruch 3, **dadurch gekennzeichnet, daß** eine vorbestimmte Bedingung darin besteht, daß der Pegel der Luftverschmutzungen in der Umgebungsluft eine eingestellte Grenze übersteigt.

5. Verfahren nach Anspruch 2 oder 4, **dadurch gekennzeichnet, daß** die Luftverschmutzungen Kohlenwasserstoffe sind.

6. Verfahren nach Anspruch 2 oder 4, **dadurch gekennzeichnet, daß** die Luftverschmutzungen Stickoxide sind.

7. Verfahren nach Anspruch 2 oder 4, **dadurch gekennzeichnet, daß** die Luftverschmutzung Kohlenmonoxid ist.

8. Verfahren nach Anspruch 2 oder 4, **dadurch gekennzeichnet, daß** die Luftverschmutzung Ozon ist.

9. Verfahren nach Anspruch 2, **dadurch gekennzeichnet, daß** das Gebläse (11) durch ein Solarpanel (P) betrieben wird, wenn die Maschine (1) abgeschaltet ist.

10. Verfahren nach Anspruch 2, **dadurch gekennzeichnet, daß** die Umgebungsluft, die durch die Adsorptionseinheit (8) gereinigt ist, zur Belüftung des Passagierraums verwendet wird.

11. Verfahren nach Anspruch 2, **dadurch gekennzeichnet, daß** die Luft während Desorption durch die Adsorptionseinheit (8) in einer Richtung entgegengesetzt zur ersten Richtung geleitet wird.

12. Verfahren nach Anspruch 2 oder 11, **dadurch gekennzeichnet, daß** die Desorption vorgenommen wird, wenn wenigstens eine vorbestimmte Bedingung erfüllt ist.

13. Verfahren nach Anspruch 12, **dadurch gekennzeichnet, daß** eine vorbestimmte Bedingung darin besteht, daß die Menge an Luftverschmutzungen, die von der Adsorptionseinheit (8) adsorbiert ist, einen eingestellten Pegel überschreitet.

14. Verfahren nach Anspruch 12, **dadurch gekennzeichnet, daß** eine vorbestimmte Bedingung darin besteht, daß der Einlaß (6) und der Auslaß (10) des Ventilationssystems geschlossen sind.

15. Verfahren nach Anspruch 12, **dadurch gekennzeichnet, daß** eine vorbestimmte Bedingung darin besteht, daß das Belüftungsgebläse (11) über eine vorbestimmte Zeitdauer betrieben worden ist.

16. Verfahren nach Anspruch 2, **dadurch gekennzeichnet, daß** die zweite Heizeinrichtung ein doppelrandiger Auslaßkrümmer (4) ist, der an der Maschine angebracht ist.

17. Verfahren nach Anspruch 1, **dadurch gekennzeichnet, daß** eine zweite Verunreinigungsadsorptionseinheit (24) in einem Abgassystem des Fahrzeugs vorgesehen ist, wobei die Adsorption von Abgas vorgenommen wird, wenn das Strömen von Abgas durch die Adsorptionseinheit (24) in einer ersten Richtung während eines Kaltstarts der Maschine vorgesehen ist, während die Desorption durchgeführt wird, wenn das Strömen der Umgebungsluft durch die Adsorptionseinheit (24) in einer zweiten Richtung vorgesehen ist, und daß die desorbierten Luftverunreinigungen von der Filtereinheit (24) zu dem Einlaßkrümmer (3) strömen.

18. Verfahren nach Anspruch 17, **dadurch gekennzeichnet, daß** die zweite Verunreinigungsadsorbierungseinheit (24) parallel zu der ersten adsorbierenden Einheit (8) geschaltet wird, wobei die Desorption für jede Adsorptionseinheit (8, 24) der Reihe nach durchgeführt wird.

19. Verfahren nach Anspruch 18, **dadurch gekennzeichnet, daß** die zweite Verunreinigungsadsorptionseinheit (24) mittels Dreiwegeventilen (30, 32) angeschlossen wird, wobei die Strömung von Umgebungsluft zwischen den beiden Adsorptionseinheiten (8, 24) geschaltet werden kann.

20. Verfahren nach Anspruch 19, **dadurch gekennzeichnet, daß** die erste Adsorptionseinheit (8) Verschmutzungen von der Umgebungsluft während der Desorption der zweiten Adsorptionseinheit (24) adsorbiert.

21. Anordnung zur Entfernung von Luftverschmutzungen aus der Umgebungsluft mittels einer Adsorptionseinheit (8), die in einem Fahrzeug angeordnet ist, wobei das Fahrzeug eine Verbrennungsmaschine (1) mit einem Einlaßkrümmer (3) und einem Auslaßkrümmer (4) und einem Ventilationssystem (5, 6, 7, 8, 9, 10, 11) für einen Passagierraum aufweist, wobei die Anordnung einen Adsorptionsmodus besitzt, der betrieben werden kann, wenn die Maschine läuft und wenn die Maschine abgeschaltet ist, wobei zu der Anordnung gehören:
- ein Gebläse (11) in dem Ventilationssystem,
- ein erster Lufteinlaß (6) für Umgebungsluft,
- ein erster Luftauslaß (10), der zur Versorgung von Luft zu dem Passagierraum vorgesehen ist,
- eine Verschmutzungsadsorptionseinheit (8), die zwischen dem Lufteinlaß (6) und dem Luftauslaß (10) vorgesehen ist,
**dadurch gekennzeichnet, daß** die Anordnung einen Desorptionsmodus aufweist, der betrieben werden kann, wenn die Maschine läuft, wobei zu der Anordnung gehören:
- ein zweiter Lufteinlaß (6') für Umgebungsluft,
- eine erste Heizeinrichtung (13), die zum Erwärmen der Umgebungsluft vorgesehen ist,
- die Verschmutzungsadsorptionseinheit (8), die für das Desorbieren mittels der erhitzten Umgebungsluft vorgesehen ist,
- eine zweite Heizeinrichtung (4, 16) zur Erwärmung der Mischung aus Luft und Verschmutzungen, wobei die erhitzte Mischung für das Erwärmen der Umgebungsluft in der ersten Heizeinrichtung (13) vorgesehen ist,
- ein Steuerventil (19), das zwischen der ersten Heizeinrichtung und dem Einlaßkrümmer (3) angeordnet ist, wobei das Ventil zur Verbindung des zweiten Lufteinlasses mit einer Unterdruckquelle, die mittels des Einlaßkrümmers geschaffen ist, vorgesehen ist.

22. Anordnung nach Anspruch 21, **dadurch gekennzeichnet, daß** in dem Adsorptionsmodus das Gebläse (19) zum Betrieb vorgesehen ist, wenn wenigstens eine vorbestimmte Bedingung erfüllt ist.

23. Anordnung nach Anspruch 22, **dadurch gekennzeichnet, daß** eine vorbestimmte Bedingung darin besteht, daß die Maschine (1) abgeschaltet ist.

24. Anordnung nach Anspruch 22, **dadurch gekennzeichnet, daß** eine vorbestimmte Bedingung darin besteht, daß der Pegel an Verschmutzung in der Umgebungsluft eine vorbestimmte Grenze übersteigt.

25. Anordnung nach einem der Ansprüche 22 bis 24, **dadurch gekennzeichnet, daß** eine vorbestimmte Bedingung darin besteht, daß sowohl der Lufteinlaß (6) als auch der Luftauslaß (10) offen sind.

26. Anordnung nach Anspruch 21, **dadurch gekennzeichnet, daß** in dem Desorptionsmodus das Öffnen des Steuerventils (19) vorgesehen ist, wenn wenigstens eine vorbestimmte Bedingung erfüllt ist.

27. Anordnung nach Anspruch 26, **dadurch gekennzeichnet, daß** eine vorbestimmte Bedingung darin besteht, daß die Maschine (1) ihre normale Betriebstemperatur erreicht hat.

28. Anordnung nach Anspruch 26, **dadurch gekennzeichnet, daß** eine vorbestimmte Bedingung darin besteht, daß ein Sensor (S₁) einen vorbestimmten Sättigungspegel der Adsorptionseinheit angezeigt hat.

29. Anordnung nach Anspruch 26, **dadurch gekennzeichnet, daß** eine vorbestimmte Bedingung darin besteht, daß sowohl der Lufteinlaß (6) als auch der Luftauslaß (10) geschlossen sind.

30. Anordnung nach Anspruch 21, **dadurch gekennzeichnet, daß** die Luftströmung durch die Adsorptionseinheit (8) während der Desorption reversiert ist.

31. Anordnung nach Anspruch 21, **dadurch gekennzeichnet, daß** die erste Heizeinrichtung (13) ein Wärmetauscher ist.

32. Anordnung nach Anspruch 21, **dadurch gekennzeichnet, daß** die zweite Heizeinrichtung (4, 16) ein Wärmetauscher ist, der für das Erwärmen durch den Auslaßkrümmer (4) vorgesehen ist.

33. Anordnung nach Anspruch 21, **dadurch gekennzeichnet, daß** die Anordnung weiterhin eine Einrichtung zum Adsorbieren von Luftverschmutzungen aus dem Maschinenabgas während eines Kaltstarts aufweist, wobei zu der Einrichtung gehören:
- eine zweite Verschmutzungsadsorptionseinheit (24);
- ein Abgaseinlaß (23), der ein Abgassystem des Fahrzeugs mit der zweiten Verschmutzungsadsorptionseinheit (24) verbindet;
- ein Abgasauslaß (25), der die zweite Verschmutzungsadsorptionseinheit (24) mit dem Abgassystem verbindet;
und daß die Anordnung einen Desorptionsmodus besitzt, der betrieben werden kann, wenn die Maschine läuft, wobei zu der Anordnung gehören:
- ein erstes Steuerventil (32), das zwischen der ersten Heizeinrichtung (13) und der ersten Verschmutzungsadsorptionseinheit (8) angeordnet ist,
- ein Einlaß (31) für erhitzte Umgebungsluft,
- eine zweite Verschmutzungsadsorptionseinheit (24), die für das Desorbieren mittels der erhitzten Umgebungsluft vorgesehen ist,
- ein Auslaß (29) für die Mischung aus erhitzter Umgebungsluft und Luftverschmutzungen,
- ein zweites Steuerventil (30), das zwischen der ersten Verschmutzungsadsorptionseinheit (8) und der zweiten Heizeinrichtung (4, 16) angeordnet ist.

34. Anordnung nach Anspruch 33, **dadurch gekennzeichnet, daß** die ersten und zweiten Steuerventile (30, 32) zum Verbinden der Zufuhr von erhitzter Umgebungsluft mit den Verschmutzungsadsorptionseinheiten (8, 24) der Reihe nach vorgesehen ist.

35. Anordnung nach Anspruch 33, **dadurch gekennzeichnet, daß** eine erste Abgasdrossel (26) in dem Abgassystem zwischen dem Abgaseinlaß (23) und dem Abgasauslaß (25) angeordnet ist, wobei die Drossel das Schließen während eines Kaltstarts vorgesehen ist.

36. Anordnung nach Anspruch 33, **dadurch gekennzeichnet, daß** der Abgaseinlaß (23) und der Abgasauslaß (25) jeweils mit einer zweiten und dritten Abgasdrossel (27, 28) entsprechend versehen sind, wobei die Drosseln für das Schließen während des Desorptionsmodus vorgesehen sind.

## Revendications

1. Procédé pour enlever des polluants de l'air ambiant au moyen d'une unité d'adsorption (8) agencée dans un véhicule, lequel véhicule comprend un moteur à combustion (1), présentant un collecteur d'admission (3) et une tubulure d'échappement (4), et un système de ventilation (5, 6, 7, 8, 9, 10, 11) pour un habitacle passager, dans lequel une unité d'adsorption de pollution (8) est agencée dans le système de ventilation, dans lequel on réalise une adsorption des polluants lorsque l'air ambiant est dirigé à travers le système de ventilation et l'unité d'adsorption (8) selon une première direction, **caractérisé en ce que** l'on réalise une désorption lorsque l'air ambiant est chauffé par la tubulure d'échappement et dirigé à travers l'unité d'adsorption (8) selon une seconde direction, et **en ce que** les polluants désorbés s'écoulent depuis l'unité de filtration (8) vers le collecteur d'admission (3).

2. Procédé selon la revendication 1, **caractérisé en ce que** l'adsorption s'effectue à la fois lorsque le moteur (1) est en marche et lorsque le moteur est arrêté, dans lequel :
- on fait fonctionner un ventilateur (11) dans le système de ventilation ;
- le ventilateur (11) pousse l'air ambiant d'une entrée (6) vers le système de ventilation selon une première direction, à travers une unité d'adsorption (8) montée dans ledit système, et au dehors par une sortie (10) du système de ventilation,
et **en ce que** la désorption de l'unité d'adsorption s'effectue lorsque le moteur (1) est en marche, dans lequel :
- de l'air ambiant est acheminé à un premier moyen de chauffage (13) au niveau duquel il est chauffé ;
- on fait passer l'air chauffé à travers l'unité d'adsorption (8) dans le but de relâcher les polluants vers l'air et de régénérer ladite unité ;
- on fait passer l'air contenant lesdits polluants à travers un second moyen de chauffage (4, 16) ;
- on fait passer l'air pollué chauffé à travers le premier moyen de chauffage (13) dans le but de chauffer ledit air ambiant ;
- l'air pollué est extrait du premier moyen de chauffage (13) et dirigé vers un conduit d'admission (3) du moteur à combustion (1).

3. Procédé selon la revendication 2, **caractérisé en ce que** l'on fait fonctionner le ventilateur (11) lorsque le moteur (1) est arrêté, si au moins une condition prédéterminée est remplie.

4. Procédé selon la revendication 3, **caractérisé en ce que** l'une des conditions prédéterminées consiste **en ce que** la teneur en polluants dans l'air ambiant dépasse une limite établie.

5. Procédé selon la revendication 2 ou 4, **caractérisé en ce que** les polluants sont des hydrocarbures.

6. Procédé selon la revendication 2 ou 4, **caractérisé en ce que** les polluants sont des oxydes d'azote.

7. Procédé selon la revendication 2 ou 4, **caractérisé en ce que** le polluant est du monoxyde de carbone.

8. Procédé selon la revendication 2 ou 4, **caractérisé en ce que** le polluant est de l'ozone.

9. Procédé selon la revendication 2, **caractérisé en ce que** le ventilateur (11) est alimenté par un panneau solaire (P) lorsque le moteur (1) est arrêté.

10. Procédé selon la revendication 2, **caractérisé en ce que** l'on utilise l'air ambiant nettoyé par l'unité d'adsorption (8) afin de ventiler l'habitacle passager.

11. Procédé selon la revendication 2, **caractérisé en ce que** l'on fait passer l'air à travers l'unité d'adsorption (8) dans une direction opposée à ladite première direction pendant la désorption.

12. Procédé selon la revendication 2 ou 11, **caractérisé en ce que** l'on réalise la désorption lorsqu'au moins une condition prédéterminée est remplie.

13. Procédé selon la revendication 12, **caractérisé en ce que** l'une des conditions prédéterminées consiste **en ce que** la quantité de polluants adsorbés par l'unité d'adsorption (8) dépasse une teneur établie.

14. Procédé selon la revendication 12, **caractérisé en ce que** l'une des conditions prédéterminées consiste **en ce que** l'entrée (6) et la sortie (10) du système de ventilation sont fermées.

15. Procédé selon la revendication 12, **caractérisé en ce que** l'une des conditions prédéterminées consiste **en ce que** l'on fait fonctionner le ventilateur de ventilation (11) pendant une durée prédéterminée.

16. Procédé selon la revendication 2, **caractérisé en ce que** le second moyen de chauffage est une tubulure d'échappement à double paroi (4) fixée audit moteur (1).

17. Procédé selon la revendication 1, **caractérisé en ce que** l'on agence une seconde unité d'adsorption de pollution (24) dans un système d'échappement du véhicule, dans lequel on réalise une adsorption de polluants lorsque un échappement est dirigé à travers l'unité d'adsorption (24) selon une première direction lors d'un démarrage à froid du moteur, tandis que l'on réalise une désorption lorsque l'air ambiant est dirigé à travers l'unité d'adsorption (24) selon une seconde direction, et **en ce que** des polluants désorbés s'écoulent à partir de l'unité de filtration (24) vers le collecteur d'admission (3).

18. Procédé selon la revendication 17, **caractérisé en ce que** l'on raccorde la seconde unité d'adsorption de pollution (24) en parallèle avec la première unité d'adsorption (8), dans lequel on réalise tour à tour une désorption pour chaque unité d'adsorption (8, 24).

19. Procédé selon la revendication 18, **caractérisé en ce que** l'on raccorde la seconde unité d'adsorption de pollution (24) au moyen de valves à trois voies (30, 32), dans lequel on peut commuter l'écoulement de l'air ambiant entre les deux unités d'adsorption (8, 24).

20. Procédé selon la revendication 19, **caractérisé en ce que** la première unité d'adsorption (8) adsorbe des polluants à partir de l'air ambiant pendant la désorption de la seconde unité d'adsorption (24).

21. Agencement pour enlever des polluants de l'air ambiant au moyen d'une unité d'adsorption (8) agencée dans un véhicule, lequel véhicule comprend un moteur à combustion (1) muni d'un collecteur d'admission (3) et d'une tubulure d'échappement (4), et un système de ventilation (5, 6, 7, 8, 9, 10, 11) pour un habitacle passager, dans lequel l'agencement dispose d'un mode d'adsorption susceptible de fonctionner lorsque le moteur est en marche et lorsque le moteur est arrêté, dans lequel l'agencement comprend :
- un ventilateur (11) dans le système de ventilation,
- une première entrée d'air (6) pour l'air ambiant,
- une première sortie d'air (10), agencée pour alimenter en air l'habitacle passager,
- une unité d'adsorption de pollution (8), agencée entre ladite entrée d'air (6) et ladite sortie d'air (10),
**caractérisé en ce que** l'agencement dispose d'un mode de désorption susceptible de fonctionner lorsque le moteur est en marche, dans lequel l'agencement comprend :
- une seconde entrée d'air (6) pour l'air ambiant,
- un premier moyen de chauffage (13), destiné à chauffer l'air ambiant,
- l'unité d'adsorption de pollution (8), conçue pour être désorbée par ledit air ambiant chauffé,
- un second moyen de chauffage (4, 16) destiné à chauffer le mélange d'air et de pollutions, lequel mélange chauffé est destiné à chauffer l'air ambiant au sein du premier moyen de chauffage (13),
- une valve de régulation (19) positionnée entre ledit premier moyen de chauffage et le collecteur d'admission (3), laquelle valve est agencée pour raccorder ladite seconde entrée d'air à une source de vide fournie par le collecteur d'admission.

22. Agencement selon la revendication 21, **caractérisé en ce que**, en mode adsorption, le ventilateur (19) est agencé pour fonctionner lorsqu'au moins une condition prédéterminée est remplie.

23. Agencement selon la revendication 22, **caractérisé en ce que** l'une des conditions prédéterminées consiste **en ce que** le moteur (1) est arrêté.

24. Agencement selon la revendication 22, **caractérisé en ce que** l'une des conditions prédéterminées consiste **en ce que** le niveau de pollution dans l'air ambiant dépasse une limite prédéterminée.

25. Agencement selon l'une quelconque des revendications 22 à 24, **caractérisé en ce que** l'une des conditions prédéterminées consiste à la fois **en ce que** l'entrée d'air (6) et la sortie d'air (10) sont ouvertes.

26. Agencement selon la revendication 21, **caractérisé en ce que**, en mode désorption, la valve de régulation (19) est agencée pour s'ouvrir lorsqu'au moins une condition prédéterminée est remplie.

27. Agencement selon la revendication 26, **caractérisé en ce que** l'une des conditions prédéterminées consiste **en ce que** le moteur (1) a atteint sa température habituelle de fonctionnement.

28. Agencement selon la revendication 6, **caractérisé en ce que** l'une des conditions prédéterminées consiste **en ce qu'**un capteur (S1) a indiqué un niveau prédéterminé de saturation de l'unité d'adsorption.

29. Agencement selon la revendication 26, **caractérisé en ce que** l'une des conditions prédéterminées consiste à la fois **en ce que** l'entrée d'air (6) et la sortie d'air (10) sont fermées.

30. Agencement selon la revendication 21, **caractérisé en ce que** le flux d'air à travers l'unité d'adsorption (8) est inversé pendant la désorption.

31. Agencement selon la revendication 21, **caractérisé en ce que** le premier moyen de chauffage (13) est un échangeur de chaleur.

32. Agencement selon la revendication 1, **caractérisé en ce que** le second moyen de chauffage (4, 16) est un échangeur de chaleur agencé pour être chauffé par la tubulure d'échappement (4).

33. Agencement selon la revendication 21, **caractérisé en ce qu'**il comprend en outre des moyens pour adsorber des polluants à partir de l'échappement du moteur pendant un démarrage à froid, dans lequel lesdits moyens comprennent :
- une seconde unité d'adsorption de pollution (24) ;
- une entrée d'échappement (23), raccordant un système d'échappement du véhicule avec la seconde unité d'adsorption de pollution (24) ;
- une sortie d'échappement (25), reliant la seconde unité d'adsorption de pollution (24) avec le système d'échappement ;
et **en ce que** l'agencement dispose d'un mode de désorption susceptible de fonctionner lorsque le moteur est en marche, dans lequel l'agencement comprend :
- une première valve de régulation (32), positionnée entre le premier moyen de chauffage (13) et la première unité d'adsorption de pollution (8),
- une entrée (31) pour l'air ambiant chauffé,
- la seconde unité d'adsorption de pollution (24), agencée pour être désorbée par ledit air ambiant chauffé,
- une sortie (29) pour le mélange d'air ambiant chauffé et de polluants,
- une seconde valve de régulation (30), positionnée entre la première unité d'adsorption de pollution (8) et le second moyen de chauffage (4, 16).

34. Agencement selon la revendication 33, **caractérisé en ce que** la première et la seconde valve de régulation (30, 32) sont agencées pour raccorder tour à tour l'alimentation en air ambiant chauffé aux unités d'adsorption de pollution (8, 24).

35. Agencement selon la revendication 33, **caractérisé en ce qu'**un premier régulateur d'échappement (26) est positionné dans le système d'échappement entre l'entrée d'échappement (23) et la sortie d'échappement (25), lequel régulateur est agencé pour se fermer pendant un démarrage à froid.

36. Agencement selon la revendication 33, **caractérisé en ce que** l'entrée d'échappement (23) et la sortie d'échappement (25) sont chacune constituées avec respectivement un deuxième et troisième régulateur d'échappement (27, 28), lesquels régulateurs sont agencés pour se fermer pendant un mode de désorption.
